# EUROPEAN PATENT APPLICATION

(11) **EP 4 492 499 A1**
(43) Date of publication of application: **15.01.2025**
(21) Application number: 23826956.7
(22) Date of filing: 05.06.2023
(51) Int. Cl.: H01M 4/58, H01G 11/06, H01G 11/30, H01M 4/136, H01M 4/36

(54) **ACTIVE MATERIAL PARTICLES, ELECTRODE, POWER STORAGE ELEMENT AND POWER STORAGE DEVICE**

(30) Priority: 22.06.2022 JP 2022100657
(71) Applicant: GS Yuasa International Ltd., Kisshoin, Minami-ku, Kyoto-shi, Kyoto 601-8520 (JP)
(72) Inventor: ENDO, Daisuke, Kyoto-shi, Kyoto 601-8520 (JP)
(74) Representative: Isarpatent
(86) International application number: PCT/JP2023/020763
(87) International publication number: WO 2023/248769

(57) **Abstract**

An active material particle according to one aspect of the present invention is a granular material in which a particle containing a lithium transition metal compound having a polyanion structure is coated with a carbon material, and has an amount of change in particle size of 1.1 nm or less when pressurized from 20 mN to 100 mN.

## Description

### TECHNICAL FIELD

The present invention relates to an active material particle, an electrode, an energy storage device, and an energy storage apparatus.

### BACKGROUND ART

Nonaqueous electrolyte secondary batteries typified by lithium ion nonaqueous electrolyte secondary batteries are widely used in electronic devices such as personal computers and communication terminals, motor vehicles, and the like because the batteries are high in energy density. Nonaqueous electrolyte secondary batteries generally include an electrode assembly including a pair of electrodes electrically isolated by a separator, and a nonaqueous electrolyte interposed between the electrodes and are configured to be charged and discharged by transferring charge transport ions between both the electrodes. In addition, capacitors such as lithium ion capacitors and electric double-layer capacitors are also widely in use as energy storage devices except for the nonaqueous electrolyte secondary batteries.

As a positive active material used in an energy storage device, a lithium transition metal compound having a polyanion structure such as lithium iron phosphate is known. Patent Document 1 describes a nonaqueous electrolyte secondary battery including a positive electrode containing lithium iron phosphate as a positive active material and a negative electrode containing graphite as a negative active material. The lithium transition metal compound having a polyanion structure is usually used in the form of a granular material coated with a carbon material from the viewpoint of electron conductivity and the like.

### PRIOR ART DOCUMENT

### PATENT DOCUMENT

Patent Document 1: JP-A-2007-213961

### SUMMARY OF THE INVENTION

### PROBLEMS TO BE SOLVED BY THE INVENTION

When a lithium transition metal compound having a polyanion structure is used for an active material, it is difficult to densify an active material layer. Therefore, an electrode and an energy storage device using a lithium transition metal compound having a polyanion structure do not have a sufficiently large discharge capacity per volume.

The present invention has been made in view of the above circumstances, and an object of the present invention is to provide an active material particle capable of increasing a discharge capacity per volume of an active material layer, and an electrode, an energy storage device, and an energy storage apparatus using such an active material particle.

### MEANS FOR SOLVING THE PROBLEMS

An active material particle according to one aspect of the present invention is a granular material in which a particle containing a lithium transition metal compound having a polyanion structure is coated with a carbon material, and has an amount of change in particle size of 1.1 nm or less when pressurized from 20 mN to 100 mN.

An electrode according to another aspect of the present invention includes the active material particle.

An electrode according to another aspect of the present invention includes an active material layer containing the active material particle, and the active material layer has a density of 1.8 g/cm³ or more.

An energy storage device according to another aspect of the present invention includes the electrode.

An energy storage apparatus according to another aspect of the present invention includes two or more energy storage devices and includes one or more of the energy storage devices.

### ADVANTAGES OF THE INVENTION

According to one aspect of the present invention, it is possible to provide an active material particle capable of increasing a discharge capacity per volume of an active material layer, and an electrode, an energy storage device, and an energy storage apparatus using such an active material particle.

### BRIEF DESCRIPTION OF THE DRAWINGS

Fig. 1 is a see-through perspective view illustrating an embodiment of an energy storage device.
Fig. 2 is a schematic diagram illustrating an embodiment of an energy storage apparatus including a plurality of energy storage devices.

### MODE FOR CARRYING OUT THE INVENTION

First, outlines of an active material particle, an electrode, and an energy storage device disclosed in the present specification will be described.

[1] An active material particle according to one aspect of the present invention is a granular material in which a particle containing a lithium transition metal compound having a polyanion structure is coated with a carbon material, and has an amount of change in particle size of 1.1 nm or less when pressurized from 20 mN to 100 mN.

The active material particle according to [1] can increase a discharge capacity per volume of an active material layer. Although the reason for this is not clear, the following reason is presumed. A particle containing a conventional lithium transition metal compound having a polyanion structure is relatively brittle. Therefore, when a particle containing a conventional lithium transition metal compound having a polyanion structure is used, deformation, cracking, and the like of the particle occur at the time of pressing the active material layer in the manufacturing process of the electrode, so that the bulk density of the particles decreases, and as a result, the density of the active material layer is not sufficiently increased. On the other hand, it is presumed that since the active material particle according to [1] has a small deformation amount when pressurized, an active material layer having a high density can be formed by pressing, and the discharge capacity per volume of the active material layer can be increased.

The measurement of the amount of change in the particle size of the active material particle is performed on the particle in a fully discharged state by the following method when the particle is incorporated into an energy storage device as a positive active material. First, the energy storage device is subjected to constant current charge with a charge current of 0.05 C until the voltage reaches an end-of-charge voltage under normal usage to be brought into a fully charged state. After a 30-minute pause, the nonaqueous electrolyte energy storage device is subjected to constant current discharge with a discharge current of 0.05 C to the end-of-discharge voltage (lower limit voltage) during normal usage. After the battery is disassembled to take out the positive electrode, a test battery using a metal lithium electrode as the counter electrode is assembled, constant current discharge is performed at a current value of 10 mA per 1 g of a positive composite until the positive potential reaches 2.0 V vs. Li/Li⁺, the positive electrode is adjusted to the completely discharged state. The cell is disassembled again to take out the positive electrode. An electrolyte and the like attached onto the taken out positive electrode are sufficiently washed with dimethyl carbonate and is dried at room temperature all day and night, and then the active material particle is collected. The collected active material particle is subjected to measurement. Operations from disassembly of the energy storage device to collection of the active material particle are performed in an argon atmosphere having a dew point of -60°C or lower. The "under normal usage" means use of the energy storage device while employing charge conditions and discharge conditions recommended or specified in the energy storage device. With respect to the charge conditions, for example, when a charger for the energy storage device is prepared, the term refers to a case of using the energy storage device by applying the charger.

The amount of change in the particle size of the active material particle is measured by a micro-compression test using a micro-compression testing machine ("MCT-511" manufactured by Shimadzu Corporation). As a probe, a diamond planar indenter with a diameter of 50 pm is used. One active material particle is pressurized at a probe speed of 0.134 mN/sec, and a displacement amount of the probe in a pressure range of 20 mN to 100 mN is defined as the amount of change in particle size when pressurized from 20 mN to 100 mN. In addition, the amount of change in particle size is measured for five active material particles, and the average value thereof is adopted. The active material particle to be measured is selected from particles with a particle size of 1/2 times or more and 2 times or less the average particle size of the active material particles. The "particle size" of each particle is defined as an average value of the minor axis and the major axis. The minor axis is the shortest diameter passing through the center of the minimum circumscribed circle of the particle, and the major axis is the diameter passing through the center and orthogonal to the minor axis. When there are two or more shortest diameters, the shortest diameter with the longest diameter orthogonal to the diameter is defined as the minor axis. The "average particle size" means a value at which a volume-based integrated distribution calculated in accordance with JIS-Z-8819-2 (2001) is 50% based on a particle size distribution measured by a laser diffraction/scattering method for a diluted solution obtained by diluting particles with a solvent in accordance with JIS-Z-8825 (2013).

[2] In the active material particle according to [1], the rate of change in particle size when pressurized from 20 mN to 100 mN may be 0.05% or less. The active material particle according to [2] can form an active material layer having a higher density, and can further increase the discharge capacity per volume of the active material layer. The deformation rate of the particle size is defined as a percentage of the amount of change in particle size when pressured from 20 mN to 100 mN with respect to the average particle size of the active material particles.

[3] In the active material particle according to [1] or [2], the particle containing a lithium transition metal compound having a polyanion structure may be a secondary particle. In general, when a particle containing a lithium transition metal compound having a polyanion structure is a secondary particle, deformation, cracking, and the like during pressing are particularly likely to occur, so that the problem that the discharge capacity per volume of the active material layer does not increase becomes remarkable. Therefore, in the active material particle according to [3], since the particle containing a lithium transition metal compound having a polyanion structure is a secondary particle, improvement effects of suppressing deformation, cracking, and the like during pressing and increasing the discharge capacity per volume of the active material layer are remarkably generated. The secondary particle refers to a particle formed by aggregation of a plurality of primary particles.

[4] An electrode according to another aspect of the present invention includes the active material particle according to any one of [1] to [3]. Since the electrode according to [4] includes the active material particle according to any one of [1] to [3], the discharge capacity per volume of the active material layer is large.

[5] An electrode according to another aspect of the present invention includes an active material layer containing the active material particle according to any one of [1] to [3], and the active material layer has a density of 1.8 g/cm³ or more. Since the electrode according to [5] includes the active material particle according to any one of [1] to [3], and has a high density of the active material layer, the discharge capacity per volume is large.

The "density" (g/cm³) of the active material layer is a value calculated from the mass per area of the active material layer and the average thickness of one layer of the active material layer. That is, the "density" of the active material layer is an apparent density. The average thickness of the active material layer is regarded as the average value of thicknesses measured at any five points.

[6] An energy storage device according to another aspect of the present invention includes the electrode according to [4] or [5]. Since the energy storage device according to [6] includes the electrode according to [4] or [5] including the active material particle according to any one of [1] to [3], the discharge capacity per volume of the active material layer is large.

[7] An energy storage apparatus according to another aspect of the present invention includes two or more energy storage devices, and one or more energy storage devices according to [6]. Since the energy storage apparatus according to [7] includes one or more energy storage devices according to [6], the discharge capacity per volume of the active material layer is large.

An active material particle according to an embodiment of the present invention, a method for producing the same, an electrode, an energy storage device, an energy storage apparatus, a method for manufacturing the energy storage device, and other embodiments will be described in detail. The names of the respective constituent members (respective constituent elements) for use in the respective embodiments may be different from the names of the respective constituent members (respective elements) for use in the background art.

### <Active material particle>

The active material particle according to an embodiment of the present invention is a granular material in which a particle containing a lithium transition metal compound having a polyanion structure is coated with a carbon material.

Examples of the lithium transition metal compound having a polyanion structure include compounds containing an oxoacid anion (PO₄³⁻, SO₄²⁻, SiO₄⁴⁻, BO₃³⁻, VO₄³⁻, etc.), a lithium ion, and a transition metal ion. The oxoacid anion may be a condensed anion (P₂O₇⁴⁻, P₃O₁₀⁵⁻, etc.). The lithium transition metal compound having a polyanion structure may have an olivine-type crystal structure. The lithium transition metal compound having a polyanion structure is typically a polyanion compound containing a lithium element and a transition metal element, and may further contain other elements (for example, a halogen element and the like). As the transition metal element of the lithium transition metal compound having a polyanion structure, an iron element, a manganese element, a nickel element, and a cobalt element are preferable, and an iron element is more preferable. The oxoacid anion of the lithium transition metal compound having a polyanion structure is preferably a phosphate anion (PO₄³⁻).

As the lithium transition metal compound having a polyanion structure, a compound represented by the following formula (1) is preferable.

LiₐM_{b}(AO_{c})_{d}Xₑ (1)

In the formula (1), M represents at least one transition metal element. A is at least one selected from B, Al, Si, P, S, Cl, Ti, V, Cr, Mo, and W. X is at least one halogen element, a, b, c, d, and e are numbers that satisfy 0 < a ≤ 3, 0 < b ≤ 2, 2 ≤ c ≤ 4, 1 ≤ d ≤ 3, and 0 ≤ e ≤ 1. Each of a, b, c, d, and e may be an integer or a decimal.

M in the formula (1) is preferably any one of Fe, Mn, Ni, and Co, or a combination of any two thereof. M is further preferably Fe, Mn, or a combination thereof, and more preferably Fe. In addition, the content of Fe in M is preferably 50 mol% or more, more preferably 70 mol% or more, 90 mol% or more, or 99 mol% or more. A is preferably P. X is preferably F. As an embodiment, a = 1, b = 1, c = 4, d = 1, and e = 0 may be preferable.

Specific examples of the lithium transition metal compound having a polyanion structure include LiFePO₄, LiCoPO₄, LiFe_{0.5}Co_{0.5}PO₄, LiMnPO₄, LiNiPO₄, LiMn_{0.5}Fe_{0.5}PO₄, LiCrPO₄, LiFeVO₄, Li₂FeSiO₄, Li₂Fe₂(SO₄)₃, LiFeBOs, LiFePO_{3.9}F_{0.2}, Li₃V₂(PO₄)₃, Li₂MnSiO₄, and Li₂CoPO₄F. Some of atoms or polyanions in the lithium transition metal compound having a polyanion structure may be partially substituted with other atoms or anion species. One of the lithium transition metal compound having a polyanion structure may be used singly, or two or more thereof may be used in mixture.

The content of the lithium transition metal compound having a polyanion structure in the particle containing the lithium transition metal compound having a polyanion structure may be 60% by mass or more, 80% by mass or more, 90% by mass or more, 95% by mass or more, or 99% by mass or more.

The particle containing the lithium transition metal compound having a polyanion structure may be a particle in which a plurality of primary particles exist alone without aggregation (single particle), but is preferably a secondary particle formed by aggregation of a plurality of primary particles. The particle is, for example, a secondary particle of the lithium transition metal compound having a polyanion structure.

The particle containing the lithium transition metal compound having a polyanion structure is coated with a carbon material to constitute the active material particle according to an embodiment of the present invention. Apart of the carbon material may be present inside the particle containing the lithium transition metal compound having a polyanion structure. In the active material particle, there may be a portion not coated with the carbon material (for example, a portion where the lithium transition metal compound having a polyanion structure is exposed).

Since the carbon material coats the particle containing the lithium transition metal compound having a polyanion structure, the active material particle can exhibit sufficient electron conductivity between the particles. The carbon material is, for example, a material having a carbon element content of 80% by mass or more and 100% by mass or less. The content of the carbon element in the carbon material may be 90% by mass or more, or may be 95% by mass. Examples of elements other than the carbon element that may be contained in the carbon material include an oxygen element, a hydrogen element, and a nitrogen element. Examples of the carbon material include graphite and non-graphite carbon.

The content of the carbon material in the active material particle is preferably 0.1% by mass or more and 20% by mass or less, more preferably 0.2% by mass or more and 10% by mass or less, still more preferably 0.3% by mass or more and 5% by mass or less, and even more preferably 0.5% by mass or more and 2% by mass or less. When the content of the carbon material in the active material particle is equal to or more than the above lower limit, for example, electron conductivity can be enhanced. When the content of the carbon material in the active material particle is equal to or less than the above upper limit, the content of the lithium transition metal compound having a polyanion structure can be increased, and the discharge capacity per volume of the active material layer can be further increased, for example.

The total content of the lithium transition metal compound having a polyanion structure and the carbon material in the active material particle is preferably 90% by mass or more and 100% by mass or less, and may be 95% by mass or more, 98% by mass or more, 99% by mass or more, or 99.9% by mass or more.

The upper limit of the amount of change in particle size when the active material particle is pressurized from 20 mN to 100 mN is 1.1 nm, and is preferably 1.0 nm, and may be more preferably 0.9 nm, 0.8 nm, 0.7 nm, 0.6 nm, 0.5 nm, 0.4 nm, or 0.3 nm. When the amount of change in particle size is equal to or less than the above upper limit, the density of the active material layer can be increased, and the discharge capacity per volume of the active material layer can be increased. The lower limit of the amount of change in particle size may be, for example, 0.001 nm, 0.01 nm, or 0.1 nm. The amount of change in particle size may be equal to or more than any of the above lower limits and equal to or less than any of the above upper limits.

The upper limit of the rate of change in particle size when the active material particle is pressurized from 20 mN to 100 mN is preferably 0.05%, more preferably 0.03%, still more preferably 0.015%, and may be even more preferably 0.012%, 0.010%, 0.008%, 0.006%, or 0.004%. When the rate of change in particle size is equal to or less than the above upper limit, the density of the active material layer can be further increased, and the discharge capacity per volume of the active material layer can be further increased. The lower limit of the rate of change in particle size may be, for example, 0.0001%, 0.001%, or 0.002%. The rate of change in particle size may be equal to or more than any of the above lower limits and equal to or less than any of the above upper limits.

The average particle size of the active material particles is preferably 0.5 pm or more and 30 pm or less, more preferably 1 pm or more and 20 pm or less, still more preferably 2 pm or more and 15 pm or less, even more preferably 4 pm or more and 10 pm or less, and even more preferably 6 pm or more and 8 pm or less. When the average particle size of the active material particles is in the above range, the density of the active material layer can be further increased, and the discharge capacity per volume of the active material layer can be further increased. A crusher, a classifier, or the like is used to obtain the active material particle with a predetermined average particle size. Examples of the crushing method include a method of using a mortar, a ball mill, a sand mill, a vibratory ball mill, a planetary ball mill, a jet mill, a counter jet mill, a whirling airflow-type jet mill, a sieve, or the like. At the time of crushing, wet-type crushing in coexistence of water or an organic solvent such as hexane can also be used. As a classification method, a sieve or a wind force classifier or the like is used based on the necessity both in dry manner and in wet manner.

### <Method for producing active material particles>

The active material particle according to an embodiment of the present invention can be efficiently obtained by adjusting the pH of a reaction liquid using ammonia water or the like when producing a hydroxide precursor in a method using a hydroxide precursor, a lithium source, and a carbon source. By such a production method, an active material particle which is spherical and whose particle shape is hardly deformed even when pressed is obtained. Hereinafter, the production method will be described in detail. However, the active material particle of the present invention is not limited to one produced by the following production method.

First, a hydroxide precursor is obtained by a precipitation reaction between a transition metal ion and a hydroxide ion in water. Specifically, for example, a hydroxide precursor (a hydroxide of a transition metal) is obtained by adding a transition metal salt aqueous solution, a sodium hydroxide aqueous solution, and the like dropwise to water. The transition metal salt may be any salt that contains a transition metal element constituting a desired lithium transition metal compound and has water solubility, and for example, iron sulfate, iron chloride, cobalt sulfate, manganese sulfate, nickel sulfate, and the like can be used. In addition, a potassium hydroxide aqueous solution or the like can be used instead of the sodium hydroxide aqueous solution. When the transition metal salt aqueous solution, the sodium hydroxide aqueous solution, and the like are added dropwise to water, an aqueous ammonia solution or the like is further added dropwise to the reaction liquid in order to maintain the pH of water (reaction liquid) to which these aqueous solutions are added dropwise within a predetermined range. The pH of the reaction liquid is preferably in the range of 8.5 to 10.5. When the pH of the reaction liquid is out of the above range, and when an aqueous ammonia solution or the like is not added dropwise to the reaction liquid even when the pH of the reaction liquid is within the above range, the active material particle to be finally obtained tends to have a large amount of change in particle size upon pressurization. The concentration of the aqueous ammonia solution to be added dropwise can be, for example, about 0.3 mol/dm³ or more and 1 mol/dm³ or less. The pH of the reaction liquid can be adjusted by adjusting the concentration, the amount of dropwise addition, and the like of the aqueous ammonia solution, the sodium hydroxide aqueous solution, and the like to be added dropwise. Another alkaline aqueous solution such as a hydrazine aqueous solution may be further added dropwise together with the aqueous ammonia solution. The pH of the reaction liquid can also be adjusted by the amount of other alkaline aqueous solutions added dropwise or the like.

Subsequently, the obtained hydroxide precursor, a lithium source, and a carbon source are mixed and fired in an inert atmosphere (for example, in a nitrogen atmosphere), thereby obtaining the active material particle according to an embodiment of the present invention. As the lithium source, a compound having a polyanion structure such as LiH₂PO₄, Li₃PO₄, or LiHSO₄ and containing a lithium element can be suitably used. In addition, as the lithium source, LiOH, lithium halide, or the like can be used. When the lithium source to be used is not a compound having a polyanion structure, a compound having a polyanion structure is further mixed and fired. As the compound having a polyanion structure, salts of ammonium cations and polyanions such as NH₄H₂PO₄, (NH₄)₃PO₄, (NH₄)₂HPO₄, (NH₄)₂SO₄, and NH₄VO₃ can be suitably used. As the carbon source, an organic substance such as sucrose, lactose, maltose, sucrose, polyvinyl alcohol, or ascorbic acid can be used. The firing temperature can be, for example, 500°C or higher and 800°C or lower.

### <Electrode>

An electrode according to an embodiment of the present invention includes the active material particle according to an embodiment of the present invention. The electrode is an electrode for an energy storage device. Hereinafter, a positive electrode as the electrode according to an embodiment of the present invention will be described.

The positive electrode has a positive substrate and a positive active material layer disposed directly on the positive substrate or over the positive substrate with an intermediate layer interposed therebetween.

The positive substrate has conductivity. Whether the positive substrate has "conductivity" or not is determined with the volume resistivity of 10⁻² Ω cm measured in accordance with JIS-H-0505 (1975) as a threshold. As the material of the positive substrate, a metal such as aluminum, titanium, tantalum, or stainless steel, or an alloy thereof is used. Among these metals and alloys, aluminum or an aluminum alloy is preferable from the viewpoints of electric potential resistance, high conductivity, and cost. Examples of the positive substrate include a foil, a deposited film, a mesh, and a porous material, and a foil is preferable from the viewpoint of cost. Accordingly, the positive substrate is preferably an aluminum foil or an aluminum alloy foil. Examples of the aluminum or aluminum alloy include A1085, A3003, A1N30, and the like specified in JIS-H-4000 (2014) or JIS-H-4160 (2006).

The average thickness of the positive substrate is preferably 3 pm or more and 50 pm or less, more preferably 5 pm or more and 40 pm or less, still more preferably 8 pm or more and 30 pm or less, and particularly preferably 10 pm or more and 25 pm or less. The average thickness of the positive substrate falls within the range mentioned above, thereby making it possible to increase the energy density per volume of the energy storage device while increasing the strength of the positive substrate.

The intermediate layer is a layer arranged between the positive substrate and the positive active material layer. The intermediate layer includes a conductive agent such as carbon particles, thereby reducing contact resistance between the positive substrate and the positive active material layer. The configuration of the intermediate layer is not particularly limited, and includes, for example, a binder and a conductive agent.

The positive active material layer contains the active material particle. The positive active material layer contains other positive active material other than the active material particle, and optional components such as a conductive agent, a binder, a thickener and a filler as necessary.

The active material particle contained in the positive active material layer is the active material particle described above as the active material particle according to an embodiment of the present invention. The content of the active material particles in the positive active material layer is preferably 50% by mass or more and 99% by mass or less, more preferably 70% by mass or more and 98% by mass or less, still more preferably 80% by mass or more and 95% by mass or less. The content of the active material particles falls within the range mentioned above, thereby allowing a balance to be achieved between the increased discharge capacity per volume and productivity of the positive active material layer.

The positive active material layer may further contain a positive active material other than the active material particle according to an embodiment of the present invention. As the other positive active material, various conventionally known positive active materials can be used. However, the content of the active material particles according to an embodiment of the present invention with respect to all the positive active materials (the total of the active material particle according to an embodiment of the present invention and other positive active materials) contained in the positive active material layer is preferably 90% by mass or more, more preferably 99% by mass or more, and still more preferably 100% by mass. When the positive active material is substantially composed of only the active material particle according to an embodiment of the present invention as described above, for example, the discharge capacity per volume of the positive active material layer can be further increased.

The conductive agent is not particularly limited as long as it is a material exhibiting conductivity. Examples of such a conductive agent include carbon materials, metals, and conductive ceramics. Examples of the carbon materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the form of the conductive agent include a powdery form and a fibrous form. As the conductive agent, one of these materials may be used singly, or two or more thereof may be mixed and used. These materials may be composited and then used. For example, a material in which carbon black and CNT are composited may be used. Among these materials, carbon black is preferable from the viewpoint of electron conductivity and coatability, and in particular, acetylene black is preferable.

The content of the conductive agent in the positive active material layer is preferably 1% by mass or more and 10% by mass or less, and more preferably 3% by mass or more and 9% by mass or less. The content of the conductive agent falls within the range mentioned above, thereby allowing the energy density and the like of the energy storage device to be increased. The content of the conductive agent does not include the carbon material contained in the active material particle according to an embodiment of the present invention (the carbon material that coats a particle containing a lithium transition metal compound having a polyanion structure).

Examples of the binder include: thermoplastic resins such as fluororesin (polytetrafluoroethylene (PTFE), polyvinylidene fluoride (PVDF), etc.), polyethylene, polypropylene, polyacryl, and polyimide; elastomers such as an ethylene-propylene-diene rubber (EPDM), sulfonated EPDM, a styrene butadiene rubber (SBR), and a fluororubber; and polysaccharide polymers.

The content of the binder in the positive active material layer is preferably 1% by mass or more and 10% by mass or less, more preferably 3% by mass or more and 9% by mass or less. The content of the binder falls within the range mentioned above, thereby allowing the positive active material to be stably held.

Examples of the thickener include polysaccharide polymers such as carboxymethylcellulose (CMC) and methylcellulose. When the thickener has a functional group that is reactive with lithium and the like, the functional group may be deactivated by methylation or the like in advance. In the case of using a thickener, the content of the thickener in the positive active material layer can be, for example, 0.1% by mass or more and 8% by mass or less, and can also be 5% by mass or less or 1% by mass or less. The technique disclosed herein can be preferably carried out in an aspect in which the positive active material layer contains no thickener.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof. In the case of using a filler, the content of the filler in the positive active material layer can be, for example, 0.1% by mass or more and 8% by mass or less, and can also be 5% by mass or less or 1% by mass or less. The technique disclosed herein can be preferably carried out in an aspect in which the positive active material layer contains no filler.

The positive active material layer may contain a typical nonmetal element such as B, N, P, F, Cl, Br, or I, a typical metal element such as Li, Na, Mg, Al, K, Ca, Zn, Ga, Ge, Sn, Sr, or Ba, and a transition metal element such as Sc, Ti, V, Cr, Mn, Fe, Co, Ni, Cu, Mo, Zr, Nb, or W as components other than the active material particle, other positive active materials, a conductive agent, a binder, a thickener, and a filler.

The lower limit of the density of the positive active material layer is preferably 1.8 g/cm³, more preferably 1.9 g/cm³, still more preferably 2.0 g/cm³, and even more preferably 2.1 g/cm³. When the density of the positive active material layer is equal to or more than the above lower limit, the discharge capacity per volume of the positive active material layer can be further increased. The upper limit of the density of the positive active material layer may be 2.6 g/cm³, 2.5 g/cm³, 2.4 g/cm³, or 2.3 g/cm³. The density of the positive active material layer may be equal to or more than any of the above lower limits and equal to or less than any of the above upper limits. The density of the positive active material layer can be adjusted by the type of active material particle, the strength of pressing when producing the positive electrode, and the like.

The mass per unit area of one positive active material layer is preferably 0.3 g/cm² or more and 3 g/cm² or less, more preferably 0.5 g/cm² or more and 2.0 g/cm² or less, and still more preferably 0.7 g/cm² or more and 1.5 g/cm² or less. When the mass per unit area of one positive active material layer is within the above range, for example, the discharge capacity of the energy storage device can be increased.

The positive electrode can be fabricated, for example, by stacking the positive active material layer along at least one surface of the positive substrate by applying a positive composite paste to the positive substrate and drying the positive composite paste. The positive composite paste contains, for example, each component constituting the positive active material layer and a dispersion medium. After the positive composite paste is applied and dried, pressing is preferably performed. By pressing, a positive active material layer having a high density can be obtained.

### <Energy storage device>

An energy storage device according to an embodiment of the present invention includes: an electrode assembly including a positive electrode, a negative electrode, and a separator; an electrolyte; and a case that houses the electrode assembly and the electrolyte. The electrode assembly is typically a stacked type assembly that has a plurality of positive electrodes and a plurality of negative electrodes stacked with separators interposed therebetween, or a wound type assembly that has stacked positive and negative electrodes wound with a separator interposed therebetween. The electrolyte is present in a state of being contained in the positive electrode, the negative electrode, and the separator. The electrolyte may be a nonaqueous electrolyte. As an example of the energy storage device, a nonaqueous electrolyte secondary battery (hereinafter, also referred to simply as a "secondary battery") in which the electrolyte is a nonaqueous electrolyte will be described.

### (Positive electrode)

As the positive electrode provided in the energy storage device, the positive electrode described above as the electrode according to an embodiment of the present invention can be used.

### (Negative electrode)

The negative electrode has a negative substrate and a negative active material layer disposed directly on the negative substrate or over the negative substrate with an intermediate layer interposed therebetween. The configuration of the intermediate layer is not particularly limited, and for example, can be selected from the configurations exemplified for the positive electrode.

The negative substrate has conductivity. As the material of the negative substrate, a metal such as copper, nickel, stainless steel, nickel-plated steel, or aluminum, an alloy thereof, a carbon material, or the like is used. Among these metals and alloys, the copper or copper alloy is preferable. Examples of the negative substrate include a foil, a deposited film, a mesh, and a porous material, and a foil is preferable from the viewpoint of cost. Accordingly, the negative substrate is preferably a copper foil or a copper alloy foil. Examples of the copper foil include a rolled copper foil and an electrolytic copper foil.

The average thickness of the negative substrate is preferably 2 pm or more and 35 pm or less, more preferably 3 pm or more and 30 pm or less, still more preferably 4 pm or more and 25 pm or less, particularly preferably 5 pm or more and 20 pm or less. When the average thickness of the negative substrate falls within the range mentioned above, the energy density per volume of the energy storage device can be increased while increasing the strength of the negative substrate.

The negative active material layer contains a negative active material. The negative active material layer includes optional components such as a conductive agent, a binder, a thickener, and a filler, if necessary. The optional components such as a conductive agent, a binder, a thickener, and a filler can be selected from the materials exemplified for the positive electrode.

The negative active material layer may contain typical nonmetal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Ta, Hf, Nb, and W as a component other than the negative active material, the conductive agent, the binder, the thickener, and the filler.

The negative active material can be appropriately selected from known negative active materials. As the negative active material for a lithium ion secondary battery, a material capable of occluding and releasing lithium ions is typically used. Examples of the negative active material include metal Li; metals or metalloids such as Si and Sn; metal oxides or metalloid oxides such as oxides of Si, oxides of Ti, and oxides of Sn; titanium-containing oxides such as Li₄Ti₅O₁₂, LiTiO₂, and TiNb₂O₇; polyphosphoric acid compounds; silicon carbides; and carbon materials such as graphite and non-graphitic carbon (easily graphitizable carbon or hardly graphitizable carbon). Among these materials, graphite and non-graphitic carbon are preferable. In the negative active material layer, one of these materials may be used alone, or two or more thereof may be used in mixture.

The term "graphite" refers to a carbon material in which an average lattice spacing (d₀₀₂) of the (002) plane determined by an X-ray diffraction method before charge-discharge or in a discharge state is 0.33 nm or more and less than 0.34 nm. Examples of the graphite include natural graphite and artificial graphite. Artificial graphite is preferable from the viewpoint that a material that has stable physical properties can be obtained.

The term "non-graphitic carbon" refers to a carbon material in which the average lattice spacing (d₀₀₂) of the (002) plane determined by the X-ray diffraction method before charge-discharge or in the discharged state is 0.34 nm or more and 0.42 nm or less. Examples of the non-graphitic carbon include hardly graphitizable carbon and easily graphitizable carbon. Examples of the non-graphitic carbon include a resin-derived material, a petroleum pitch or a material derived from a petroleum pitch, a petroleum coke or a material derived from a petroleum coke, a plant-derived material, and an alcohol-derived material.

In this regard, the "discharged state" means a state discharged such that lithium ions that can be occluded and released in association with charge-discharge are sufficiently released from the carbon material as the negative active material. For example, the "discharged state" refers to a state where the open circuit voltage is 0.7 V or higher in a half cell that has, as a working electrode, a negative electrode including a carbon material as a negative active material, and has metal Li as a counter electrode.

The term "hardly graphitizable carbon" refers to a carbon material in which the d₀₀₂ is 0.36 nm or more and 0.42 nm or less.

The term "easily graphitizable carbon" refers to a carbon material in which the d₀₀₂ is 0.34 nm or more and less than 0.36 nm.

The negative active material is typically particles (powder). The average particle size of the negative active material can be, for example, 1 nm or more and 100 pm or less. When the negative active material is a carbon material, a titanium-containing oxide, or a polyphosphoric acid compound, the average particle size thereof may be 1 pm or more and 100 pm or less. When the negative active material is Si, Sn, an oxide of Si, an oxide of Sn, or the like, the average particle size thereof may be 1 nm or more and 1 pm or less. By setting the average particle size of the negative active material to be equal to or more than the above lower limit the negative active material is easily produced or handled. By setting the average particle size of the negative active material to be equal to or less than the above upper limit, the electron conductivity of the negative active material layer is improved. A crusher, a classifier, or the like is used in order to obtain a powder with a predetermined particle size. When the negative active material is a metal such as metal Li, the negative active material layer may have the form of a foil.

The content of the negative active material in the negative active material layer is preferably 60% by mass or more and 99% by mass or less, more preferably 90% by mass or more and 98% by mass or less. The content of the negative active material falls within the range mentioned above, thereby allowing a balance to be achieved between the increased energy density and productivity of the negative active material layer.

### (Separator)

The separator can be appropriately selected from known separators. As the separator, for example, a separator composed of only a substrate layer, a separator in which a heat resistant layer containing heat resistant particles and a binder is formed on one surface or both surfaces of the substrate layer, or the like can be used. Examples of the form of the substrate layer of the separator include a woven fabric, a nonwoven fabric, and a porous resin film. Among these forms, a porous resin film is preferable from the viewpoint of strength, and a nonwoven fabric is preferable from the viewpoint of liquid retaining properties of the nonaqueous electrolyte. As the material for the substrate layer of the separator, for example, a polyolefin such as polyethylene or polypropylene is preferable from the viewpoint of shutdown function, and polyimide, aramid, or the like is preferable from the viewpoint of resistance to oxidative decomposition. As the substrate layer of the separator, a material obtained by combining these resins may be used.

The heat resistant particles included in the heat resistant layer preferably have a mass loss of 5% or less in the case of temperature increase from room temperature to 500°C under the air atmosphere of 1 atm, and more preferably have a mass loss of 5% or less in the case of temperature increase from room temperature to 800°C. Examples of materials that have a mass loss equal to or less than a predetermined value include inorganic compounds. Examples of the inorganic compound include oxides such as iron oxide, silicon oxide, aluminum oxide, titanium dioxide, zirconium oxide, calcium oxide, strontium oxide, barium oxide, magnesium oxide and aluminosilicate; nitrides such as aluminum nitride and silicon nitride; carbonates such as calcium carbonate; sulfates such as barium sulfate; hardly soluble ionic crystals such as calcium fluoride, barium fluoride, barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, and artificial products thereof. As the inorganic compounds, a simple substance or a complex of these substances may be used singly, or two or more thereof may be used in mixture. Among these inorganic compounds, the silicon oxide, aluminum oxide, or aluminosilicate is preferable from the viewpoint of the safety of the energy storage device.

The porosity of the separator is preferably 80% by volume or less from the viewpoint of strength, and is preferably 20% by volume or more from the viewpoint of discharge performance. The "porosity" herein is a volume-based value, which means a value measured with a mercury porosimeter.

As the separator, a polymer gel composed of a polymer and a nonaqueous electrolyte may be used. Examples of the polymer include polyacrylonitrile, polyethylene oxide, polypropylene oxide, polymethyl methacrylate, polyvinyl acetate, polyvinylpyrrolidone, and polyvinylidene fluoride. The use of the polymer gel has the effect of suppressing liquid leakage. As the separator, the polymer gel may be used in combination with a porous resin film, a nonwoven fabric, or the like as described above.

### (Nonaqueous electrolyte)

The nonaqueous electrolyte can be appropriately selected from known nonaqueous electrolytes. For the nonaqueous electrolyte, a nonaqueous electrolyte solution may be used. The nonaqueous electrolyte solution includes a nonaqueous solvent and an electrolyte salt dissolved in the nonaqueous solvent.

The nonaqueous solvent can be appropriately selected from known nonaqueous solvents. Examples of the nonaqueous solvent include cyclic carbonates, chain carbonates, carboxylic acid esters, phosphoric acid esters, sulfonic acid esters, ethers, amides, and nitriles. As the nonaqueous solvent, solvents in which some of the hydrogen atoms included in these compounds are substituted with halogen may be used.

Examples of the cyclic carbonates include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among these carbonates, EC is preferable.

Examples of the chain carbonates include diethyl carbonate (DEC), dimethyl carbonate (DMC), ethyl methyl carbonate (EMC), diphenyl carbonate, trifluoroethyl methyl carbonate, and bis(trifluoroethyl)carbonate. Among these carbonates, EMC is preferable.

As the nonaqueous solvent, the cyclic carbonate or the chain carbonate is preferably used, more preferably, the cyclic carbonate and the chain carbonate are used in combination. The use of the cyclic carbonate allows the promoted dissociation of the electrolyte salt to improve the ionic conductivity of the nonaqueous electrolyte solution. The use of the chain carbonate allows the viscosity of the nonaqueous electrolyte solution to be kept low. When the cyclic carbonate and the chain carbonate are used in combination, the volume ratio of the cyclic carbonate to the chain carbonate (cyclic carbonate : chain carbonate) preferably falls within the range from 5 : 95 to 50 : 50, for example.

The electrolyte salt can be appropriately selected from known electrolyte salts. Examples of the electrolyte salt include a lithium salt, a sodium salt, a potassium salt, a magnesium salt, and an onium salt. Among these salts, the lithium salt is preferable.

Examples of the lithium salt include inorganic lithium salts such as LiPF₆, LiPO₂F₂, LiBF₄, LiClO₄, and LiN(SO₂F)₂, lithium oxalates such as lithium bis(oxalate)borate (LiBOB), lithium difluorooxalatoborate (LiFOB), and lithium bis(oxalate)difluorophosphate (LiFOP), and lithium salts having a halogenated hydrocarbon group, such as LiSO₃CF₃, LiN(SO₂CF₃)₂, LiN(SO₂C₂F₅)₂, LiN(SO₂CF₃)(SO₂C₄F₉), LiC(SO₂CF₃)₃, and LiC(SO₂C₂F₅)₃. Among these salts, the inorganic lithium salts are preferable, and LiPF₆ is more preferable.

The content of the electrolyte salt in the nonaqueous electrolyte solution is, at 20°C under 1 atm, preferably 0.1 mol/dm³ or more and 2.5 mol/dm³ or less, more preferably 0.3 mol/dm³ or more and 2.0 mol/dm³ or less, still more preferably 0.5 mol/dm³ or more and 1.7 mol/dm³ or less, and particularly preferably 0.7 mol/dm³ or more and 1.5 mol/dm³ or less. When the content of the electrolyte salt falls within the range mentioned above, the ionic conductivity of the nonaqueous electrolyte solution can be increased.

The nonaqueous electrolyte solution may include an additive, besides the nonaqueous solvent and the electrolyte salt. Examples of the additive include halogenated carbonic acid esters such as fluoroethylene carbonate (FEC) and difluoroethylene carbonate (DFEC); oxalic acid salts such as lithium bis(oxalate)borate (LiBOB), lithium difluorooxalatoborate (LiFOB), and lithium bis(oxalate)difluorophosphate (LiFOP); imide salts such as lithium bis(fluorosulfonyl)imide (LiFSI); aromatic compounds such as biphenyl, alkylbiphenyl, terphenyl, partly hydrogenated terphenyl, cyclohexylbenzene, t-butylbenzene, t-amylbenzene, diphenyl ether, and dibenzofuran; partial halides of the aromatic compounds, such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methylvinylene carbonate, ethylvinylene carbonate, succinic anhydride, glutaric anhydride, maleic anhydride, citraconic anhydride, glutaconic anhydride, itaconic anhydride, cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethylsulfoxide, diethylsulfoxide, tetramethylene sulfoxide, diphenyl sulfide, 4,4'-bis(2,2-dioxo-1,3,2-dioxathiolane, 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, tetrakistrimethylsilyl titanate, lithium monofluorophosphate, and lithium difluorophosphate. These additives may be used singly, or in mixture of two or more thereof.

The content of the additive contained in the nonaqueous electrolyte solution is preferably 0.01% by mass or more and 10% by mass or less, more preferably 0.1% by mass or more and 7% by mass or less, still more preferably 0.2% by mass or more and 5% by mass or less, particularly preferably 0.3% by mass or more and 3% by mass or less, with respect to a total mass of the nonaqueous electrolyte solution. The content of the additive falls within the above range, thereby making it possible to improve capacity retention performance or cycle performance after high-temperature storage, and to further improve safety.

For the nonaqueous electrolyte, a solid electrolyte may be used, or a nonaqueous electrolyte solution and a solid electrolyte may be used in combination.

The solid electrolyte can be selected from any material with ionic conductivity, which is solid at normal temperature (for example, 15°C to 25°C), such as lithium, sodium and calcium. Examples of the solid electrolyte include sulfide solid electrolytes, oxide solid electrolytes, nitride solid electrolytes, and polymer solid electrolytes.

Examples of the sulfide solid electrolyte include Li₂S-P₂S₅, LiI-Li₂S-P₂S₅, and Li₁₀Ge-P₂S₁₂ in the case of a lithium ion secondary battery.

The shape of the energy storage device according to the present embodiment is not to be considered particularly limited, and examples thereof include cylindrical batteries, prismatic batteries, flattened batteries, coin batteries and button batteries.

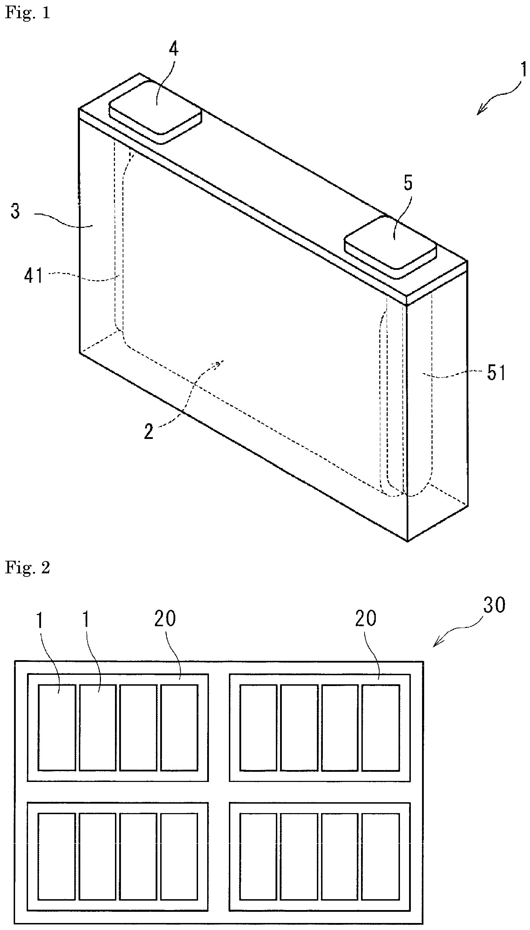

Fig. 1 shows an energy storage device 1 as an example of a prismatic battery. It is to be noted that Fig. 1 is a view illustrating the inside of a case in a perspective manner. An electrode assembly 2 including a positive electrode and a negative electrode wound with a separator interposed therebetween is housed in a prismatic case 3. The positive electrode is electrically connected to a positive electrode terminal 4 via a positive electrode lead 41. The negative electrode is electrically connected to a negative electrode terminal 5 via a negative electrode lead 51.

### <Energy storage apparatus>

The energy storage device according to the present embodiment can be mounted as an energy storage unit (battery module) configured with a plurality of energy storage devices assembled, on power sources for automobiles such as electric vehicles (EV), hybrid vehicles (HEV), and plug-in hybrid vehicles (PHEV), power sources for electronic devices such as personal computers and communication terminals, power sources for power storage, or the like. In this case, the technique of the present invention may be applied to at least one energy storage device included in the energy storage unit.

An energy storage apparatus according to an embodiment of the present invention includes two or more energy storage devices, and includes one or more energy storage devices according to an embodiment of the present invention (hereinafter, referred to as "second embodiment"). The technique according to an embodiment of the present invention may be applied to at least one energy storage device included in the energy storage apparatus according to the second embodiment, and the energy storage apparatus may include one energy storage device according to an embodiment of the present invention and include one or more energy storage devices not according to an embodiment of the present invention, or may include two or more energy storage devices according to an embodiment of the present invention.

Fig. 2 illustrates an example of an energy storage apparatus 30 according to the second embodiment, obtained by further assembling energy storage units 20 that each have two or more electrically connected energy storage devices 1 assembled. The energy storage apparatus 30 may include a busbar (not shown) that electrically connects two or more energy storage devices 1, a busbar (not shown) that electrically connects two or more energy storage units 20, and the like. The energy storage unit 20 or the energy storage apparatus 30 may include a state monitor (not shown) that monitors the state of one or more energy storage devices.

### <Method for manufacturing energy storage device>

A method for manufacturing the energy storage device of the present embodiment can be appropriately selected from known methods. The manufacturing method includes, for example, preparing an electrode assembly, preparing an electrolyte, and housing the electrode assembly and the electrolyte in a case. Preparing the electrode assembly includes: preparing a positive electrode and a negative electrode, and forming an electrode assembly by stacking or winding the positive electrode and the negative electrode with a separator interposed therebetween.

Housing the electrolyte in a case can be appropriately selected from known methods. For example, when a nonaqueous electrolyte solution is used for the electrolyte, the nonaqueous electrolyte solution may be injected from an inlet formed in the case, followed by sealing the inlet.

### <Other embodiments>

It is to be noted that the active material particle, the electrode, and the energy storage device according to the present invention are not limited to the embodiment mentioned above, and various changes may be made without departing from the scope of the present invention. For example, to the configuration of an embodiment, the configuration of another embodiment can be added, and a part of the configuration of an embodiment can be replaced by the configuration of another embodiment or a well-known technique. Furthermore, a part of the configuration according to one embodiment can be deleted. In addition, a well-known technique can be added to the configuration according to one embodiment.

While the case where the energy storage device is used as a nonaqueous electrolyte secondary battery (for example, lithium ion secondary battery) that can be charged and discharged has been described in the embodiment mentioned above, the type, shape, size, capacity, and the like of the energy storage device are arbitrary. The present invention can also be applied to various secondary batteries, and capacitors such as electric double layer capacitors and lithium ion capacitors. The energy storage device of the present invention may be an energy storage device other than the nonaqueous electrolyte energy storage device.

While the electrode assembly with the positive electrode and the negative electrode stacked with the separator interposed therebetween has been described in the embodiment mentioned above, the electrode assembly may include no separator. For example, the positive electrode and the negative electrode may be brought into direct contact with each other, with a non-conductive layer formed on the active material layer of the positive electrode or negative electrode.

In the above embodiment, the case where the electrode of the present invention is a positive electrode has been described, but the electrode of the present invention may be a negative electrode. The electrode of the present invention can also be used as a negative electrode by combining with a positive electrode using an appropriate positive active material.

### EXAMPLES

Hereinafter, the present invention will be described more specifically with reference to examples. The present invention is not limited to the following examples.

### [Example 1]

### (Preparation of active material particles)

Active material particles in which secondary particles of lithium iron phosphate were coated with a carbon material were obtained by the following procedure.

While a 1 mol/dm³ aqueous FeSO₄ solution was added dropwise at a constant rate to a 2 dm³ reaction case containing 750 cm³ of ion-exchanged water, a 4 mol/dm³ aqueous NaOH solution, a 0.5 mol/dm³ aqueous NH₃ solution, and a 0.5 mol/dm³ aqueous NH₂NH₂ solution were added dropwise so that the pH of a reaction liquid during that time is maintained at a constant value of 8.5 ± 0.1, thereby preparing an Fe(OH)₂ precursor. The temperature of the reaction case was set at 50°C ± 2°C. Next, the prepared Fe(OH)₂ precursor was taken out from the reaction case, and solid-phase mixed with 116 parts by mass of LiH₂PO₄ and 10 parts by mass of sucrose powder based on 100 parts by mass of the Fe(OH)₂ precursor. Then, the resulting mixture was fired at a firing temperature of 650°C under a nitrogen atmosphere to obtain active material particles of Example 1 in which particles of LiFePO₄ as a lithium transition metal compound having a polyanion structure were coated with a carbon material.

The content of the carbon material in the obtained active material particles of Example 1 was 1.0% by mass. The average particle size of the active material particles of Example 1 measured by the above method was 7.5 pm. When the active material particles of Example 1 were pressurized from 20 mN to 100 mN, the amount of change in particle size was 0.2 nm, and the rate of change in particle size was 0.003%, as measured by the above method.

### (Fabrication of positive electrode)

A positive composite paste was prepared using the obtained active material particles, acetylene black (AB) as a conductive agent, a polyvinylidene fluoride (PVDF) as a binder, and an N-methylpyrrolidone (NMP) as a dispersion medium. A mass ratio of the active material particles, AB, and PVDF was 90 : 5 : 5 in terms of solid content. The positive composite paste was applied onto an aluminum foil that served as a positive substrate, dried, and roll-pressed to form a positive active material layer, thereby obtaining a positive electrode or Example 1. The coating amount of the positive composite paste was 1.0 g/cm² in terms of solid content, the pressure of the roll press was 320 kgf/cm, the temperature of the roll was 120°C, and the speed was 2.0 m/min.

In the obtained positive electrode of Example 1, the density of the positive active material layer measured by the above method was 2.2 g/cm³.

### (Fabrication of negative electrode)

Graphite as a negative active material, a styrene-butadiene rubber (SBR) as a binder, carboxymethyl cellulose (CMC) as a thickener, and water as a dispersion medium were mixed to prepare a negative composite paste. The mass ratio of graphite, SBR, and CMC was 96 : 3.3 : 0.7 in terms of solid content. The negative composite paste was applied onto a copper foil that served as a negative substrate, dried, and roll-pressed to form a negative active material layer, thereby obtaining a negative electrode.

### (Nonaqueous electrolyte)

A nonaqueous electrolyte was obtained by dissolving LiPF₆ of 1.1 mol/dm³ in concentration in a solvent obtained by mixing an ethylene carbonate (EC), a diethyl carbonate (DEC), and an ethyl methyl carbonate (EMC) at volume ratios 30 : 35 : 35.

### (Separator)

As a separator, a polyethylene microporous film was used.

### (Assembly of energy storage device)

The positive electrode, the negative electrode, and the separator were stacked to prepare an electrode assembly. The obtained electrode assembly was housed in a case, and then the nonaqueous electrolyte was injected into the case and then sealed to obtain an energy storage device according to Example 1.

### [Examples 2 to 5 and Comparative Examples 1 to 3]

Active material particles, positive electrodes, and energy storage devices of Examples 2 to 5 and Comparative Examples 1 to 3 were obtained similarly to Example 1 except that in the preparation of the active material particles, the pH of the reaction liquid and the concentration of the aqueous NH₃ solution in the production of the Fe(OH)₂ precursor were as shown in Table 1. The pH of the reaction liquid was adjusted by changing the amount of each aqueous solution to be added dropwise. In Comparative Example 3, the aqueous NH₃ solution was not added dropwise.

### [Comparative Example 4]

Active material particles, a positive electrode, and an energy storage device of Comparative Example 4 were obtained similarly to Example 1 except that the active material particles were prepared by the following solid phase method.

Powders of Li₂CO₃ and FePO₄, and sucrose were solid-phase mixed at a molar ratio of 1 : 2 : 1. The resulting mixture was fired at a firing temperature of 650°C under a nitrogen atmosphere to obtain active material particles of Comparative Example 4 in which particles of LiFePO₄ as a lithium transition metal compound having a polyanion structure were coated with a carbon material.

The amount of change in particle size (particle size change amount) of each obtained active material particle when pressurized from 20 mN to 100 mN, the rate of change in particle size (particle size change rate) at this time, and the density of the positive active material layer of each positive electrode measured by the above method are shown in Table 1.

### [Evaluation]

### (Charge-discharge test)

Each of the energy storage devices of Examples and Comparative Examples was subjected to predetermined initial charge-discharge, and then subjected to a charge-discharge test in the following manner. In an environment of 25°C, constant current constant voltage charge was performed at a charge current of 0.1 C and an end-of-charge voltage of 3.6 V With regard to the charge termination conditions, the charge was performed until the total charge time reached 15 hours. After a pause period of 10 minutes was provided, constant current discharge was performed at a discharge current of 0.1 C and an end-of-discharge voltage of 2.0 V The discharge capacity per mass of the positive active material layer and the discharge capacity per volume of the positive active material layer are shown in Table 1.

**[Table 1]**

| | Active material particle production conditions | | | Active material particle | | Positive electrode | Evaluation | |
|---|---|---|---|---|---|---|---|---|
| | Production method | pH | Ammonia concentration | Particle size change amount | Particle size change rate | Density of positive active material layer | Discharge capacity per mass of active material layer | Discharge capacity per volume of active material layer |
| | - | - | mol/dm³ | nm | % | g/cm³ | mAh/g | mAh/cm³ |
| Example 1 | Via precursor | 8.5 | 0.5 | 0.2 | 0.003 | 2.2 | 160 | 352 |
| Example 2 | Via precursor | 9.0 | 0.5 | 0.4 | 0.005 | 2.1 | 159 | 334 |
| Example 3 | Via precursor | 9.5 | 0.5 | 0.6 | 0.008 | 2.1 | 158 | 332 |
| Example 4 | Via precursor | 10.0 | 0.5 | 0.8 | 0.011 | 2.1 | 159 | 334 |
| Example 5 | Via precursor | 10.5 | 0.5 | 1.0 | 0.013 | 2.0 | 158 | 316 |
| Comparative Example 1 | Via precursor | 11.0 | 0.5 | 1.2 | 0.016 | 1.7 | 156 | 265 |
| Comparative Example 2 | Via precursor | 11.5 | 0.5 | 1.5 | 0.020 | 1.6 | 156 | 250 |
| Comparative Example 3 | Via precursor | 9.0 | - | 1.3 | 0.017 | 1.6 | 158 | 253 |
| Comparative Example 4 | Solid phase method | - | - | 1.2 | 0.016 | 1.6 | 160 | 256 |

As shown in Table 1, in the energy storage devices using the respective active material particles of Examples 1 to 5 in which the amount of change in particle size when a predetermined pressure was applied was 1.1 nm or less, the density of the positive active material layer was high, and the discharge capacity per volume of the positive active material layer was large. In addition, it has been found that the active material particles in which the amount of change in particle size when a predetermined pressure was applied was 1.1 nm or less are obtained by using an aqueous NH₃ solution and adjusting the pH to an appropriate range when the hydroxide precursor is produced.

### INDUSTRIAL APPLICABILITY

The present invention is suitably used as an energy storage device including a nonaqueous electrolyte secondary battery used as a power source for electronic equipment such as personal computers and communication terminals, automobiles, and the like.

### DESCRIPTION OF REFERENCE SIGNS

1: Energy storage device
2: Electrode assembly
3: Case
4: Positive electrode terminal
41: Positive electrode lead
5: Negative electrode terminal
51: Negative electrode lead
20: Energy storage unit
30: Energy storage apparatus

## Claims

1. An active material particle which is a granular material in which a particle containing a lithium transition metal compound having a polyanion structure is coated with a carbon material, and
has an amount of change in particle size of 1.1 nm or less when pressurized from 20 mN to 100 mN.

2. The active material particle according to claim 1, which has a rate of change in particle size of 0.05% or less when pressurized from 20 mN to 100 mN.

3. The active material particle according to claim 1 or 2, wherein the particle containing a lithium transition metal compound having a polyanion structure is a secondary particle.

4. An electrode comprising the active material particle according to claim 1 or 2.

5. An electrode comprising an active material layer containing the active material particle according to claim 1 or 2, wherein
the active material layer has a density of 1.8 g/cm³ or more.

6. An energy storage device comprising the electrode according to claim 4.

7. An energy storage apparatus comprising two or more energy storage devices and one or more energy storage devices according to claim 6.
